# EUROPÄISCHE PATENTSCHRIFT

(11) **EP 2 022 668 B1**
(45) Veröffentlichungstag und Bekanntmachung des Hinweises auf die Patenterteilung: **23.02.2011**
(21) Anmeldenummer: 08014010.6
(22) Anmeldetag: 05.08.2008
(51) Int. Cl.: B60P 3/04

(54) **Absperrvorrichtung für eine Tierbox**
Blocking device for an animal transport box
Dispositif de fermeture pour un box pour animaux

(30) Priorität: 10.08.2007 DE 202007011220 U
(43) Veröffentlichungstag der Anmeldung: 11.02.2009
(73) Patentinhaber: Leipold, Michael A., 82041 Oberhaching (DE)
(72) Erfinder: Leipold, Michael A., 82041 Oberhaching (DE)
(74) Vertreter: Thoma, Michael

(56) Entgegenhaltungen:
- WO-A-95/19896
- DE-U1- 8 904 202
- DE-U1- 20 000 989
- DE-U1- 29 708 667
- DE-U1- 29 812 790
- DE-U1- 29 912 248
- US-A- 866 811

## Beschreibung

Die vorliegende Erfindung betrifft eine Absperrvorrichtung für eine Tierbox, insbesondere eine Pferdebox eines Pferdetrailers, mit einer Boxenstange zum Absperren der Tierbox, die an ihren Enden mittels Stangenhalterungen gehalten ist, wobei zumindest eine der Stangenhalterungen eine Notentriegelung zum Lösen der Boxenstange von der jeweiligen Stangenhalterung aufweist, wobei die Notentriegelung einen kraftgesteuerten Auslösemechanismus zur automatischen Auslösung bei Beaufschlagung der Boxenstange mit einer nach unten auf den Boden der Tierbox gerichteten, einen Schwellenwert überschreitenden Kraft aufweist. Die Erfindung betrifft weiterhin eine Tierbox, insbesondere einen Pferdetrailer mit einer solchen Absperrvorrichtung.

Bei Pferdetransportern, wie sie beispielsweise aus der DE 20 2005 002 422 U1, der DE 10 2005 006 844 A1, der DE 298 07 370 U1, der DE 202 07 338 U1 oder der EP 0 952 069 B1 bekannt sind, die eine oder mehrere nebeneinander angeordnete Pferdeboxen aufweisen können, wird die jeweilige Box an ihrem vorderen und/oder hinteren Ende üblicherweise mit einer Boxenstange abgesperrt, die das Pferd in einer bestimmten Stellung halten bzw. ein Herausgehen des Pferdes aus der Box verhindern soll. Üblicherweise ist dabei insbesondere am vorderen Ende der Box eine Bruststange vorgesehen, die sich liegend quer über die Breite der Box erstreckt und an deren seitlichen Wandungen befestigt ist, so dass das Pferd davor geschützt ist, zu weit in den üblicherweise dreiecksförmigen Futterraum am vorderen Ende des Transporters zu gelangen. Oftmals wird auch das hintere Ende der Box mit einer entsprechenden Boxenstange abgesperrt, um ein Heraussteigen des Pferdes rückwärts aus dem Pferdetrailer zu verhindern.

Die Boxenstangen werden dabei üblicherweise rechts und links in Haltebeschläge eingehängt, die an den seitlichen Wandungen, die die jeweilige Box begrenzen, montiert sind. Hierzu ist üblicherweise an einem Ende der Stange ein gekrümmter Haken vorgesehen, der in eine entsprechende Öse des entsprechenden Beschlagteils eingehängt wird, so dass die Stange auf und ab geschwenkt werden kann. Am gegenüberliegenden Ende weist die Boxenstange üblicherweise einen gekröpften Haken auf, der in ein Auge des anderen Beschlagteils eingehängt und dort durch einen Splint oder einen ähnlichen Sicherungsstift gesichert wird. Eine solche Boxenstange zeigt beispielsweise die DE 20 2006 010 385 U1. Bei derartigen Boxenstangen kommt es leider immer wieder vor, dass das Pferd oder ein entsprechendes Tier, wenn es in Panik gerät oder auch bei nur zu langem Abstellen des Transporters Langeweile und ein zu großer Freiheitsdrang entsteht, über die Boxenstange hinwegsteigt bzw. -springt, so dass es mit einem oder auch zwei Beinen sich jenseits der Boxenstange befindet und sozusagen auf der Boxenstange aufsitzt. Um derartige Vorfälle zu verhindern bzw. zu reduzieren, schlägt die DE 297 08 667 U1 vor, an den seitlichen Haltebeschlägen mehrere Ösen bzw. Augen vorzusehen, so dass die Boxenstange in unterschiedlichen Höhen montiert werden kann und es nicht mehr zu einer zu niedrigen oder zu hohen Boxenstange kommt. Doch auch bei Anordnung der Boxenstange in an sich optimaler Höhe vor der Brust des Pferdes bzw. am oberen Ende der Hinterläufe kommt es immer wieder zu den genannten Vorfällen, dass das Pferd über die Boxenstange hinwegsteigt bzw. -springt. Um das Pferd dann aus dieser mißlichen Lage zu befreien, muss die Boxenstange demontiert werden, was jedoch oftmals kaum möglichst ist, wenn die Boxenstange nur nach oben aus der entsprechenden Öse gehoben werden kann und dabei das Gewicht des Pferdes auf der Stange lastet. In jedem Fall besteht dabei eine Verletzungsgefahr für denjenigen, der vom inneren der Pferdebox her die Boxenstange zu lösen versucht, da sich das jeweilige Pferd dann in Panik befindet und üblicherweise ausschlägt.

Um hier Abhilfe zu schaffen, ist in der DE 89 04 202 U1 eine Notentriegelung für die Boxenstange eines Pferdetransporters vorgeschlagen, die von der Außenseite des Transporters her bedient werden kann. Dabei ist eines der Beschlagteile, in das die Boxenstange mit ihrem abgekröpften Haken eingehängt ist, als lösbare Platte ausgebildet, die in einen an der Boxenwand fest montierten Halteschuh eingesteckt ist. Ein von außen her durch die Boxenwand hindurchgeschraubter Haltebolzen ist durch die beiden Beschlagteile hindurchgeschraubt und hält das die Boxenstange tragende Beschlagteil in dem genannten Halteschuh. Tritt der zuvor beschriebene Notfall ein, kann der Schraubbolzen von der Außenseite des Transporters her gelöst werden, so dass die Boxenstange herunterfällt und das Pferd befreit wird. In der Praxis treten hierbei jedoch Schwierigkeiten auf, da der besagte Schraub- bzw. Haltebolzen nach einiger Zeit regelmäßig eingerostet ist, so dass er ohne massiveres Werkzeug nicht mehr zu lösen ist. Zum anderen dauert es oftmals eine durchaus längere Zeit, bis die Boxenstange tatsächlich entriegelt werden kann, so dass für das in Panik befindliche Pferd eine beträchtliche Verletzungsgefahr während dieser Zeit besteht.

Eine Absperrvorrichtung für eine Tierbox nach dem Oberbegriff des Anspruchs 1 ist aus der US 866,811 bekannt. Dabei ist die Boxenstange an einem Ende an einem gabelförmig gespreizten Federbügel eingehängt, der unter Zusammendrücken der Bügelenden aus einer an der Tierboxwand befestigten Halterung herausgezogen werden kann.

Hiervon ausgehend liegt der vorliegenden Erfindung die Aufgabe zugrunde, eine verbesserte Absperrvorrichtung sowie eine verbesserte Tierbox der genannten Art zu schaffen, die Nachteile des Standes der Technik vermeiden und letzteren in vorteilhafter Weise weiterbilden. Insbesondere soll eine bessere Entriegelung der Boxenstange in Notfällen erreicht werden, die ohne schweres Werkzeug funktioniert und die für das Tier eine Verletzungsgefahr bergende Rettungszeit verkürzt.

Erfindungsgemäß wird diese Aufgabe durch eine Absperrvorrichtung gemäß Anspruch 1 sowie eine Tierbox gemäß Anspruch 11 gelöst. Bevorzugte Ausgestaltungen der Erfindung sind Gegenstand der abhängigen Ansprüche.

Es wird also vorgeschlagen, die Notentriegelung automatisch arbeitend auszubilden, so dass eine händische Entriegelung der Boxenstange im Notfall nicht mehr notwendig ist. Die Notentriegelung ist dabei derart ausgebildet, dass sie dann, wenn das beträchtliche Gewicht des jeweiligen Tieres auf der Stange lastet, von selbst auslöst. Erfindungsgemäß besitzt die Notentriegelung einen kraftgesteuerten Auslösemechanismus zur automatischen Auslösung bei Beaufschlagung der Boxenstange mit einer nach unten auf den Boden der Tierbox gerichteten, einen Schwellenwert überschreitenden Kraft. Der kraftgesteuerte Auslösermechanismus gibt die Boxenstange aus der jeweiligen Stangenhalterung nach Art einer Skibindung automatisch frei, wenn der Druck auf die Boxenstange von oben her zu groß wird.

Um Fehlauslösungen zu vermeiden, ist der Auslösemechanismus in Weiterbildung der Erfindung vorteilhafterweise derart ausgebildet, dass er nur bei entsprechendem Druck auf die Boxenstange nach unten auslöst, gegenüber horizontal und/oder aufwärts vom Boden weg gerichteten Kräften auf die Boxenstange jedoch auslöseresistent ausgebildet ist. Diese Ausbildung des Auslösemechanismus stellt sicher, dass sich die Boxenstange nicht unbeabsichtigt löst, wenn das Tier beispielsweise mit der Brust ruckhaft und stark nach vorne gegen die Boxenstange drückt, wie es beispielsweise beim ruckartigen Bremsen eines Tiertransporters auftreten kann.

In Weiterbildung der Erfindung kann der Auslösemechanismus hierbei einen Bewegungsbegrenzer aufweisen, der Bewegungen der Stange aus der an der Stangenhalterung gehaltenen Stellung in horizontaler Richtung und/oder nach oben begrenzt bzw. unterbindet. Insbesondere kann die Stangenhalterung bzw. der Auslösemechanismus eine Führungsvorrichtung aufweisen, die die Boxenstange in vertikaler Richtung nach unten beweglich führt und somit Bewegungen nach unten zuläßt und/oder eine bewegliche Lagerung mit einer zugeordneten Anschlagvorrichtung vorsieht, die horizontale Bewegungen der Boxenstange und/oder nach oben gerichteter Bewegungen der Boxenstange unterbindet bzw. begrenzt, in dem die Boxenstange bzw. ein damit verbundenes Stangenhalteteil formschlüssig gegen eine entsprechende Anschlagskontur fährt. Die Lagerung der Boxenstange beweglich nur nach unten, stellt sich, dass eine Auslösung nur dann erfolgen kann, wenn das Tier tatsächlich über die Boxenstange gestiegen bzw. gesprungen ist.

In vorteilhafter Weiterbildung der Erfindung ist der Auslösemechanismus nach Art einer Skibindung elastisch rückstellend ausgebildet. Insbesondere kann der Auslösemechanismus eine Federeinrichtung aufweisen, die die Boxenstange an der Stangenhalterung bis zum Erreichen der zuvor genannten Schwellenkraft elastisch zurückhält, bei Überschreiten der genannten Schwellenkraft jedoch freigibt. Eine solche Federeinrichtung erlaubt einerseits eine präzise Auslösung bei einer definierten Kraft, andererseits ist ein mehrfaches Auslösen und Wiedereinsetzen und somit ein dauerhafter Gebrauch sichergestellt, der bei Vorrichtungen mit Sollbruchstellen nicht gegeben wäre.

In vorteilhafter Weiterbildung der Erfindung kann der Auslösemechanismus ein bewegbares, unter Last nachgiebiges Rückhalteelement aufweisen, das in einer Ausgangsstellung die Boxenstange und/oder ein damit verbundenes Stangenhalteteil vorzugsweise formschlüssig in der vorgesehenen, absperrenden Stellung zurückhält und in einer nachgegebenen Auslösestellung von der Boxenstange bzw. dem damit verbundenen Stangenhalteteil außer Eingriff gerät.

Hinsichtlich des Rückhalteelements wäre es dabei grundsätzlich möglich, dass das Rückhalteelement selbst unter Verformung nachgibt und hierdurch die genannte Auslösestellung erreicht wird. In bevorzugter Weiterbildung der Erfindung jedoch ist das Rückhalteelement beweglich zwischen der genannten Ausgangsstelle und der genannten Auslösestellung gelagert und von der zuvor genannten Federeinrichtung in die verriegelnde Ausgangsstellung vorgespannt.

Um das genannte Rückhalteelement in seine freigebende Auslösestellung zu bewegen, können verschiedene Übertrager vorgesehen sein, die die auf die Boxenstange wirkende, nach unten gerichtete Last übertragen und die genannte Last sozusagen in eine Stellkraft zur Betätigung des Rückhalteelements umsetzen. Zur Erreichung dieser Umsetzung kann als Übertrager in vorteilhafterweise ein Schrägflächen-, Keilflächen- und/oder Nockenflächenpaar vorgesehen sein, das über die Schrägung der aufeinander abgleitenden Flächen die auf die Boxenstange wirkende Last in die Stellkraft für das Rückhalteelement umsetzen. Hierbei bieten sich diverse Möglichkeiten für die Anordnung eines solchen Schrägflächenpaars. Insbesondere kann an dem Rückhalteelement selbst eine entsprechende Schräg- bzw. Keilfläche vorgesehen sein. Alternativ oder zusätzlich kann an der Boxenstange und/oder einem damit verbundenen Stangenhalteteil, das mit dem genannten Rückhalteelement in Eingriff steht, eine entsprechende Schrägfläche vorgesehen sein. Auch wenn über entsprechende Übertragungsglieder die Richtung des auf die Boxenstange lastenden Drucks umgelenkt werden kann, ist in vorteilhafterweise in Weiterbildung der Erfindung vorgesehen, dass das genannte Schrägflächenpaar zu einer vertikalen Ebene geneigt angeordnet ist. Alternativ oder zusätzlich zu einem solchen Schrägflächenpaar kann auch eine anders ausgebildete Energiesenke beispielsweise in Form einer in eine Mulde eingreifenden Kugel vorgesehen sein, die bei entsprechender schräger Beaufschlagung durch die Druckkraft auf die Boxenstange aus der Mulde herausgedrückt werden kann. Anstelle solcher formschlüssig wirkender Auslösekraft-Übertrager, können grundsätzlich auch reibschlüssig wirkende Auslösemechanismen Verwendung finden, wobei jedoch zur Erreichung einer robusten und dennoch präzise arbeitenden Auslösevorrichtung ein formschlüssiger Wirkmechanismus gewählt wird.

Das zuvor genannte Rückhalteelement kann grundsätzlich mit der Boxenstange selbst in Eingriff stehen, beispielsweise dergestalt, dass die Boxenstange in einer nach unten offenen Haltenut geführt ist und das offene Ende durch ein in die Nut vorspringendes Rückhalteelement mit einer Keilfläche versperrt ist, so dass entsprechender Druck auf die Boxenstange das Rückhalteelement zurückdrückt und somit die Boxenstange aus der nach unten offenen Nut herausfallen kann.

In bevorzugter Weiterbildung der Erfindung jedoch steht das Rückhalteelement mit einem separaten Stangenhalteteil in Eingriff, an dem die Boxenstange lösbar befestigt werden kann. Insbesondere kann ein separates Stangenhalteteil vorgesehen sein, das ein Auge bzw. eine Öse trägt, in die eine Boxenstange in an sich bekannter Weise mit einem gekröpften, vorspringenden Haken oder dergleichen eingehängt werden kann. Dies erlaubt es, in einfacher Weise bereits existente Tierboxen unter Verwendung der bisherigen Boxenstange mit dem Auslösemechanismus nachzurüsten. Es braucht lediglich der an einem Wandabschnitt oder einem sonstigen ortsfesten Boxenabschnitt montierte Haltebeschlag bzw. die entsprechende Stangenhalterung durch eine den Auslösemechanismus aufweisende Stangenhalterung ersetzt werden, in die die bereits existente Boxenstange in an sich bekannter Weise eingehängt werden kann.

Das besagte Stangenhalteteil ist an einem fest montierbaren Beschlagteil beweglich gelagert und/oder geführt sein, wobei ein Rückhalteelement zum Zurückhalten des beweglich gelagerten Stangenhalteteils in der Ausgangsstellung an dem fest montierten Beschlagteil vorgesehen ist.

Das auslösende Stangenhalteteil kann hierbei grundsätzlich verschieden ausgebildet sein. Nach einer vorteilhaften Ausführung der Erfindung kann das beweglich gelagerte Stangenhalteteil ein Schiebeteil bilden, das nur von unten her in ein fest montiertes Schiebeführungsteil einschiebbar bzw. darauf aufschiebbar ist, so dass es nach oben hin gegen einen Anschlag fährt, in horizontaler Richtung fest ist, jedoch nach unten aus der Schiebeführung herausgefahren werden kann. Beispielsweise kann an der Boxenwand ein nach unten hin offener Führungsschuh montiert sein, in den das Stangenhalteteil einschiebbar ist. Alternativ kann nach einer weiteren vorteilhaften Ausführung der Erfindung das Stangenhalteteil auch als Schwenkbacken ausgebildet sein, der ein zu einer Seite hin offenes Aufnahmemaul aufweist, in dem die Boxenstange liegt, wobei das Aufnahmemaul von der Drehachse des Schwenkbacken beabstandet ist, so dass entsprechender Druck nach unten zu einer Verschwenkung des Schwenkbackens führt, so dass das in der Ausgangsstellung zur Seite, schräg nach oben oder ganz nach oben offene Aufnahmemaul sich mit seiner Öffnung nach unten bewegt, so dass die Stange nach unten herausfallen kann.

Erfindungsgemäß weist die Notentriegelung zusätzlich zu dem automatischen Auslösemechanismus auch noch eine Handentriegelung auf, die auf einer Außenseite der Tierbox ein Betätigungselement aufweist, so dass die Notentriegelung auch von Hand von außen her gelöst werden kann. Die Handentriegelung kann hierbei verschiedenartig ausgebildet sein. Vorteilhafterweise kann als Betätigungselement ein Druckknopf und/oder ein Schwenkhebel vorgesehen sein, der eine einfache werkzeugfreie Betätigung ermöglicht.

Um die Auslösekraft an verschiedene Gegebenheit, beispielsweise unterschiedlich große und/oder unterschiedlich schwere Tiere, anpassen zu können, ist eine Einstellvorrichtung zur Einstellung der Auslösekraft vorgesehen. Insbesondere kann die Einstellvorrichtung in Verbindung mit der zuvor genannten Federeinrichtung Einstellmittel zur Einstellung der Vorspannkraft der Federeinrichtung aufweisen. Insbesondere kann beispielsweise wie bei einer Skibindung eine Stellschraube vorgesehen sein, mittels derer die Vorspannkraft der Federeinrichtung des Auslösemechanismus voreingestellt werden kann.

Die vorliegende Erfindung wird nachfolgend anhand bevorzugter Ausführungsbeispiele und zugehöriger Zeichnungen näher erläutert. In den Zeichnungen zeigen:
- Figur 1:: eine perspektivische Ansicht in den Innenraum einer Box eines Pferde- trailers, wobei der Stellplatz des Pferdes in der Pferdebox am vorderen und am hinteren jeweils durch eine Boxenstange abgesperrt ist, die je- weils an ihrem einen Ende schwenkbar eingehängt und an ihrem gege- nüberliegenden, an der Außenwand des Pferdetransporters liegenden Ende an einer Stangenhalterung mit Notfallentriegelung befestigt sind,
- Figur 2:: eine ausschnittsweise Darstellung einer der Boxenstangen aus Figur 1 mit den diese tragenden Stangenhalterungen rechts und links an den Seitenwänden der Pferdebox,
- Figur 3:: eine ausschnittsweise, vergrößerte Darstellung der seitlichen Stangen- halterung mit der dieser zugeordneten Notfallentriegelung, deren auto- matischer Auslösemechanismus einen federvorgespannten Rückhalte- schieber mit Schrägfläche besitzt,
- Figur 4:: eine Draufsicht auf die Stangenhalterung mit Auslösemechanismus aus Figur 3 und
- Figur 5:: eine Draufsicht auf eine Stangenhalterung mit Auslösemechanismus nach einer alternativen Ausführung der Erfindung, bei der das auslösba- re Stangenhalteteil in Form eines Schwenkbackens mit offenem Auf- nahmemaul ausgebildet ist.

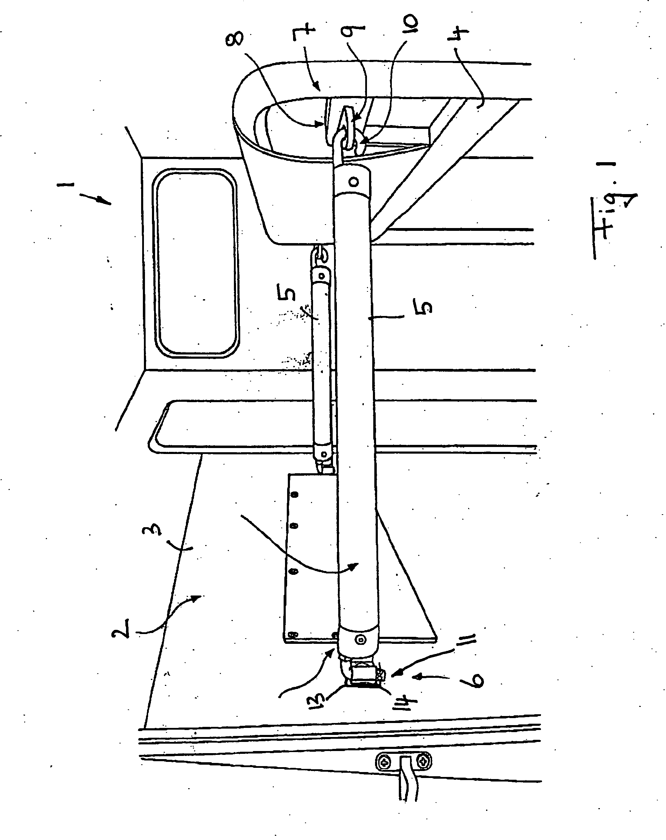

Der in Figur 1 von innen gezeigte Pferdetransporter 1 umfasst in an sich bekannter Weise einen auf einem Fahrwerk mit Rädern gelagerten Rahmen, der über eine an sich bekannte Anhängekupplung an einer Kraftfahrzeug angehängt werden kann und einen gehäuseartigen Korpus trägt, in dem in an sich bekannter Weise neben einander zwei Pferdeboxen angeordnet sind, von denen in Figur 1 eine Box 2 zu sehen ist. Die genannte Box 2 wird seitlich rechts und links von zwei aufrechten Boxenwandungen 3 und 4 begrenzt, von denen eine gleichzeitig die Außenwand des Transporters und die andere eine Zwischenwand zwischen den beiden Boxen bildet.

Wie Figur 1 zeigt, ist am vorderen Ende und am hinteren Ende der genannten Pferdebox 2 jeweils eine Boxenstange 5 vorgesehen, die die Box 2 nach vorne bzw. hinten absperrt. Die Boxenstange 5 ist dabei etwa in Brusthöhe des Tieres angeordnet und erstreckt sich im wesentlichen liegend zwischen den beiden Boxenwandungen 3 und 4, an denen sie mit ihren Enden jeweils befestigt ist.

Zur Befestigung der Boxenstange 5 an den Boxenwandungen 3 und 4 sind dabei zwei Stangenhalterungen 6 und 7 vorgesehen, an denen die Boxenstange 5 jeweils lösbar befestigt, insbesondere eingehängt werden kann. An der die Zwischenwand bildenden Boxenwandung 4 ist dabei eine Stangenhalterung 7 vorgesehen, die ein starr an der Boxenwandung 4 befestigtes Beschlagteil 8 aufweist, das eine Öse bzw. ein Auge 9 mit vertikaler Durchtrittsrichtung trägt, in das die Boxenstange 5 mit einem endseitig vorspringenden, hakenförmig umgebogenen Einhängestück 10 eingehängt werden kann, so dass die Boxenstange 5 an der Stangenhalterung 7 in verschiedene Richtungen geschwenkt werden kann, insbesondere auch nach unten geschwenkt werden kann, so dass die Boxenstange 5 im nicht sperrenden Zustand im wesentlichen senkrecht an der Boxenwand 4 nach unten hängt.

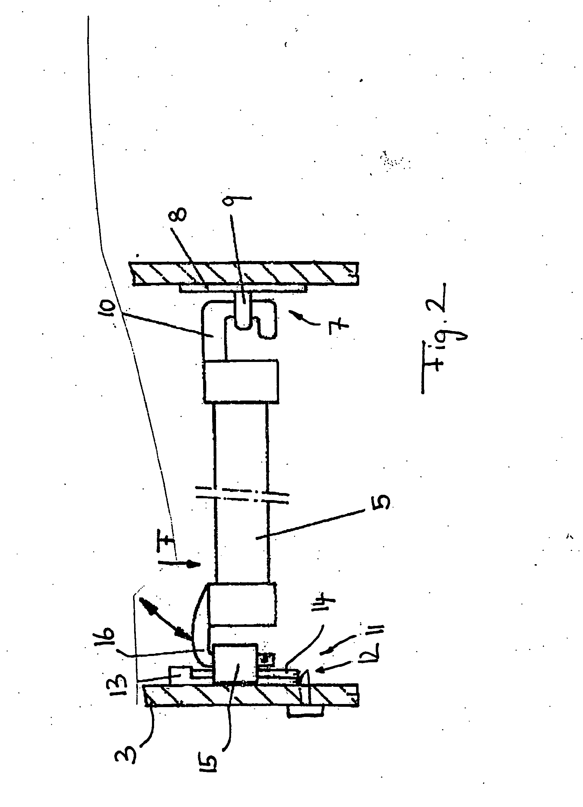

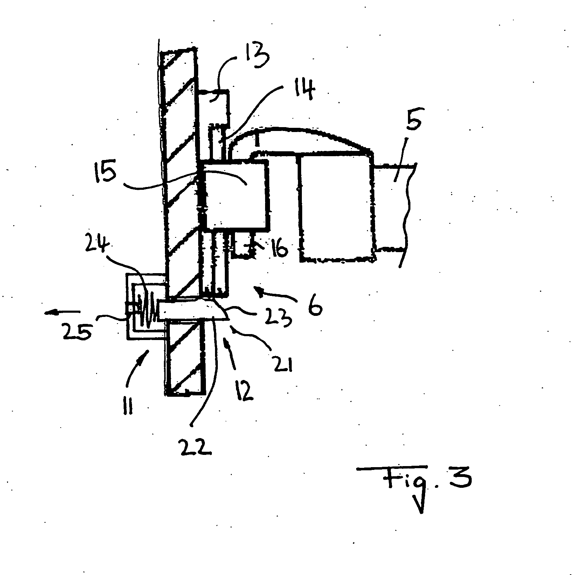

An dem gegenüberliegenden Ende ist die Boxenstange 5 an der Stangenhalterung 6 befestigt, die eine Notfallentriegelung 11 mit einem automatischen Auslösemechanismus 12 aufweist. Wie die Figuren 2 und 3 zeigen, umfasst die Stangenhalterung 6 dabei ebenfalls ein fest an der Boxenwandung 3 montiertes Beschlagteil 13, das in der gezeichneten Ausführungsform im wesentlichen plattenförmig ausgebildet ist. An diesem Beschlagteil 13 ist ein Stangenhalteteil 14 lösbar befestigt, wie noch näher beschrieben wird. Das Stangenhalteteil 14 umfasst ähnlich wie das Beschlagteil 8 der gegenüberliegenden Stangenhalterung 9 eine Öse bzw. ein Auge 15, in das die Boxenstange 5 mit einem hakenförmig gekrümmten Einhängestück 16 von oben her eingehängt werden kann. Das Auge 15 umfasst dabei eine aufrechte Durchtrittsöffnung, in die von oben her der gekröpfte Abschnitt des Einhängestücks 16 eingesetzt werden kann, wobei zur Sicherung in an sich bekannter Weise durch den unten hindurchtretenden Teil des Einhängestücks 16 ein Splint oder dergleichen eingesteckt werden kann. Anstelle der in den Figuren gezeichneten Augen 9 bzw. 15 und der damit zusammenwirkenden Einhängestücke 10 bzw. 16 könnten auch anders ausgebildete Verbindungs- und/oder Befestigungsmittel zwischen der Boxenstange 5 und dem Beschlagteil 8 bzw. dem Stangenhalteteil 14 vorgesehen sein, wobei diese vorteilhafterweise formschlüssig wirkend ausgebildet sind.

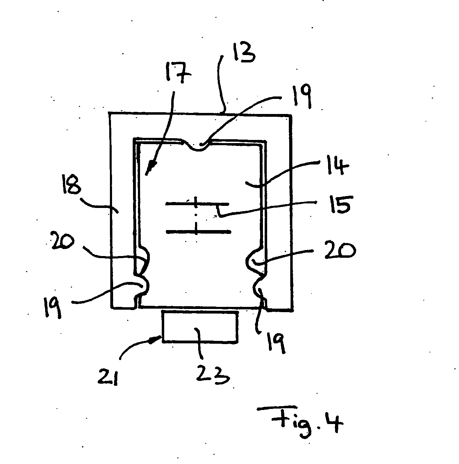

Der besagte Stangenhalteteil 14 ist dabei in der gezeichneten Ausführungsform an dem fest montierten Beschlagteil 13 in vertikaler Richtung beweglich gelagert. Insbesondere bildet dabei der fest montierte Beschlagteil 13 eine Schiebeführung 17, in die das vorzugsweise plattenförmige Stangenhalteteil 14 von unten her eingeschoben werden kann. Wie Figur 4 zeigt, besitzt das Beschlagteil 13 einen U-förmig umlaufenden Randsteg 18, so dass im wesentlichen eine nach unten offene Einschiebenut definiert wird. Der Stangenhalteabschnitt 14 kann passgenau zwischen die Schenkel des genannten Randstegs 18 eingeschoben werden, wobei die Schenkel des Randstegs 18 in der eingeschobenen Stellung eine Bewegung des Stangenhalteteils 14 in horizontaler Richtung und auch nach oben verhindern. Der Randsteg 18 bildet insofern einen Anschlag, der die genannten Bewegungen formschlüssig unterbindet. Um ein Herausfallen des Stangenhalteteils 14 von der Boxenwandung 3 weg, das heißt im wesentlichen senkrecht zur Zeichenebene der Figur 4, umfasst der Randsteg 18 drei das Stangenhalteteil 14 übergreifende Eingriffsnasen 19, die das Stangenhalteteil 14 auf dem Beschlagteil 13 halten. Wie Figur 4 zeigt, können dabei seitlich in den Stangenhalteteil 14 Aussparungen 20 vorgesehen sein, die bei Herunterschieben des Stangenhalteteils 14 und bei entsprechender Überdeckung mit den Eingriffsnasen 19 ein Lösen auch mit kurzem axialen Stellweg erlauben.

Die Schiebeführung 17 ist also derart ausgebildet, dass das Stangenhalteteil 14 nur durch eine Bewegung nach unten auf den Boden der Pferdebox zu von dem Beschlagteil 13 außer Eingriff gebracht werden kann. Um dies an sich, das heißt ohne eine die Schwellenkraft übersteigende Druckkraft auf die Boxenstange 5 zu verhindern, umfasst der Auslösemechanismus 2 in der gezeichneten Ausführungsform ein Rückhalteelement 21, das in seiner Rückhaltestellung die Öffnung, die heißt nach unten offene Seite der Schiebeführung 17 und damit den Auslöseweg des Stangenhalteteils 14 versperrt. Das besagte Rückhalteelement 21 ist dabei beweglich gelagert, so dass es aus der Bahn des Stangenhalteteils 14 herausbewegt werden kann. In der gezeichneten Ausführungsform ist das Rückhalteelement 21 dabei als Schieber ausgebildet, der an dem Beschlagteil 13 und/oder der Boxenwandung 3 verschieblich gelagert ist. Ein Eingriffskopf 22 des Rückhalteelements 21 umfasst dabei eine Keil- bzw. Schrägfläche 23, die mit dem unteren Ende des Stangenhalteteils 14 in Eingriff steht. Alternativ oder zusätzlich könnte die Schrägfläche 23 auch an dem besagten Stangenhalteteil 14 vorgesehen sein. Die Anordnung ist dabei derart getroffen, dass ein Nachuntendrücken der Boxenstange 5 und damit ein Nachuntendrücken des Stangenhalteteils 14 über die Schrägfläche 23 das Rückhalteelement 21 in seine freigebende Stellung drückt.

Das Rückhalteelement 21 ist hierbei mittels einer Federeinrichtung 24 beispielsweise in Form eines Tellerfederpakets in seine verriegelnde Stellung vorgespannt, so dass es eine bestimmte Kraft erfordert, das Rückhalteelement 21 zurückzudrücken. Vorteilhafterweise kann hierbei die Vorspannkraft der Federeinrichtung 24 durch eine Einstellvorrichtung 25 beispielsweise in Form einer Stellschraube eingestellt werden, um die Auslösekraft des Auslösemechanismus 12 an die Gegebenheiten anpassen zu können. Die notwendige Stellkraft für das Rückstellelement 21 bedingt dabei über den jeweiligen Schrägflächenwinkel der Schrägfläche 23 eine entsprechende Druckkraft auf die Boxenstange 5, um den Auslösemechanismus 12 automatisch zu betätigen.

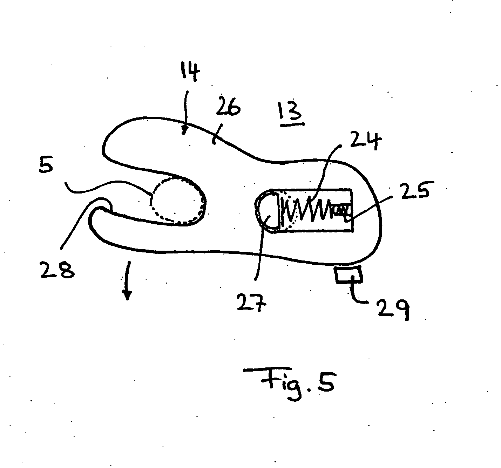

Alternativ zu der in den Figuren 2 und 3 gezeigten Lösung kann das Stangenhalteteil 14 auch in Form eines Schwenkbackens 26 ausgebildet sein, wie dies die Figur 5 zeigt. Der Schwenkbacken 26 ist dabei nach Art des vorderen Kopfs einer Skibindung um eine liegende Schwenkachse 27 schwenkbar gelagert, wobei der Schwenkbacken 26 in der gezeichneten Ausführung ein gabelförmiges, zu einer Seite hin offenes Aufnahmemaul 28 aufweist, in das die Boxenstange 5 mit ihrem einen Ende passgenau eingelegt werden kann. Vorteilhafterweise erstreckt sich dabei die Öffnung des Aufnahmemauls 28 schräg nach oben zur Innenseite der Box 2 hin, so dass das Pferd, wenn es gegen die Boxenstange 5 in der normalen Weise drückt, die Boxenstange 5 lediglich zum geschlossenen Teil des Aufnahmemauls 28 hindrückt. Die Boxenstange 5 ist in dem Aufnahmemaul 28 jedoch von der Schwenkachse 27 beabstandet, so dass bei Druck auf die Boxenstange von oben her der Schenkbacken 26 schwenkt, so dass das Aufnahmemaul 28 mit seiner offenen Seite nach unten weist und die Boxenstange 5 herausfallen kann.

Um diese Schwenkbewegung nur bei einer vorbestimmten Druckkraft auf die Boxenstange 5 von oben her zuzulassen, ist einerseits der Schwenkbacken 26 durch die Drehsicherung 29 gegen ein Verschwenken in die "falsche" Richtung gesichert. Zum anderen hält den Schwenkbacken 26 die Federeinrichtung 24 elastisch in seiner Ausgangsstellung. Hierzu umfasst die Federeinrichtung 24 in der gezeichneten Ausführung eine im Schwenkbacken 26 gelagerte Druckfeder, die in der Ausgangsstellung gegen eine Abflachung der Schenkachse 27 drückt, so dass ein Verschwenken des Schwenkbackens 26 eine Bewegung der Feder über die Kante der Abflachung erfordert und damit eine Stellbewegung der Feder mit sich bringt.

## Patentansprüche

1. Absperrvorrichtung für eine Tierbox, insbesondere eine Pferdebox (2) eines Pferdetransporters (1), mit einer Boxenstange (5) zum Absperren der Tierbox, die an ihren Enden mittels Stangenhalterungen (6, 7) gehalten ist, wobei zumindest eine der Stangenhalterungen (6) eine Notentriegelung (11) zum Lösen der Boxenstange (5) von der jeweiligen Stangenhalterung (6) aufweist, wobei die Notentriegelung (11) einen kraftgesteuerten Auslösemechanismus (12) zur automatischen Auslösung bei Beaufschlagung der Boxenstange (5) mit einer nach unten auf den Boden der Tierbox gerichteten, einen Schwellenwert überschreitenden Kraft (F) aufweist, wobei der Auslösemechanismus (12) ein mit der Boxenstange (5) lösbar verriegelbares Stangenhalteteil (14) umfasst, das beweglich an einem ortsfest montierbaren Beschlagteil (13) gelagert und zumindest mit einem die Boxenstange (5) haltenden Halteabschnitt bei Erreichen des Schwellenwerts abwärts auf den Boden der Tierbox zu bewegbar ist, **dadurch gekennzeichnet, dass** der Auslösemechanismus (12) eine Einstellvorrichtung (25) zur Einstellung der Auslösekraft zum Auslösen des Stangenhalteteils (14) aufweist, und die Notentriegelung (11) zusätzlich zu dem automatischen Auslösemechanismus eine Handentriegelung mit einem werkzeugfrei betätigbaren Handbetätigungselement aufweist, das auf einer Außenseite der Tierbox (2) angeordnet ist.

2. Absperrvorrichtung nach dem vorhergehenden Anspruch, wobei der Auslösemechanismus (12) gegenüber horizontal und/oder aufwärts vom Boden der Tierbox weg gerichteten Kräften auf die Boxenstange (5) auslöseresistent ausgebildet ist und/oder einen Bewegungsbegrenzer (30) zur Begrenzung von Bewegungen der Boxenstange (5) in horizontaler Richtung und/oder nach oben aufweist.

3. Absperrvorrichtung nach einem der vorhergehenden Ansprüche, wobei die Stangenhalterung (6) eine Führungsvorrichtung, vorzugsweise in Form einer Schiebeführung (17), zur beweglichen Führung der Boxenstange (5) und/oder eines damit verbindbaren Stangenhalteteils (14) in aufrechter Richtung aufweist und/oder eine Anschlagvorrichtung zur Begrenzung und/oder Verhindern von horizontalen Bewegungen der Boxenstange (5) und/oder des damit verbindbaren Stangenhalteteils (14) aufweist.

4. Absperrvorrichtung nach einem der vorhergehenden Ansprüche, wobei der Auslösemechanismus (12) eine Federeinrichtung (24) zum elastischen Zurückhalten der Boxenstange (5) an der Stangenhalterung (6) bis zum Erreichen der genannten Schwellenkraft aufweist.

5. Absperrvorrichtung nach einem der vorhergehenden Ansprüche, wobei der Auslösemechanismus (12) ein bewegbares, unter Last nachgiebiges Rückhalteelement (21) aufweist, das in einer Ausgangsstellung die Boxenstange (5) und/oder ein damit verbindbares Stangenhalteteil (14) verriegelt und in einer nachgegebenen Auslösestellung von der Boxenstange (5) oder dem damit verbindbaren Stangenhalteteil (14) außer Eingriff ist.

6. Absperrvorrichtung nach dem vorhergehenden Anspruch, wobei das Rückhalteelement (21) beweglich zwischen der genannten Ausgangsstellung und der genannten Auslösestellung gelagert und von der Federeinrichtung (24) in die verriegelnde Ausgangsstellung vorgespannt ist.

7. Absperrvorrichtung nach dem vorhergehenden Anspruch, wobei das beweglich gelagerte Stangenhalteteil (14) von dem Rückhalteelement (21) bis zum Erreichen der genannten Schwellenkraft auf die Boxenstange (5) in einer mit dem Beschlagteil (13) verbundenen Stellung gehalten ist.

8. Absperrvorrichtung nach einem der vorhergehenden Ansprüche, wobei das Stangenhalteteil (14) als ein nur von unten her in ein fest montierbares Schiebeführungsteil einschiebbares und/oder darauf aufschiebbares Schiebeteil ausgebildet ist.

9. Absperrvorrichtung nach einem der Ansprüche 1-7, wobei das genannte Stangenhalteteil als Schwenkbacken (26) mit einer zu einer Seite hin offenen Aufnahmemaul (28) ausgebildet ist.

10. Absperrvorrichtung nach einem der vorhergehenden Ansprüche, wobei das Rückhalteelement (21) eine als Keilfläche (23) wirkende Gleitfläche aufweist, auf der die Boxenstange (5) oder ein damit verbindbares Stangenhalteteil beim Auslösen abgleitet.

11. Tierbox, insbesondere Pferdebox eines Pferdetransporters, mit einer Absperrvorrichtung nach einem der Ansprüche 1 bis 10.

## Claims

1. A locking apparatus for an animal box, in particular for a horse box (2) of a horse transporter (1), having a box bar (5) for locking the animal box which is held at its ends by means of bar holders (6, 7), wherein at least one of the bar holders (6) has an emergency release (11) for releasing the box bar (5) from the respective bar holder (6), wherein the emergency release (11) has a power-controlled trigger mechanism (12) for automatic triggering on the application onto the box bar (5) of a force (F) directed downwardly toward the base of the animal box and exceeding a threshold value, wherein the trigger mechanism (12) includes a bar holding part (14) which is releasably latchable to the box bar (5), which is movably supported at a fitting part (13) which can be attached in a fixed position and a holding part of which, which holds the box bar (5), is movable downwardly toward the base of the animal box on the reaching of the threshold value, **characterised in that** the trigger mechanism (12) has a setting apparatus (25) for setting the trigger force for triggering the bar holding part (14); and **in that** the emergency release (11) has, in addition to the automatic trigger mechanism, a manual release having a manual actuation element which is actuable tool-free and which is arranged on an outer side of the animal box (2).

2. A locking apparatus in accordance with the preceding claim, wherein the trigger mechanism (12) is configured as trigger-resistant with respect to forces onto the box bar (5) directed horizontally and/or upwardly away from the base of the animal box and/or has a movement limiter (30) for limiting movements of the box bar (5) in the horizontal direction and/or upwardly.

3. A locking apparatus in accordance with one of the preceding claims, wherein the bar holder (6) has a guide apparatus, preferably in the form of a slide guide (17), for the movable guiding of the box bar (5) and/or of a bar holding part (14) connected thereto in the upright direction and/or an abutment
apparatus for bounding and/or preventing horizontal movements of the box bar (5) and/or of the bar holding part (14) connectable thereto.

4. A locking apparatus in accordance with one of the preceding claims, wherein the trigger mechanism (12) has a spring device (24) for elastically restraining the box bar (5) at the bar holder (6) up to the reaching of the named threshold force.

5. A locking apparatus in accordance with one of the preceding claims, wherein the trigger mechanism (12) has a movable retention element (21) which is yieldable under load, which locks the box bar (5) and/or a bar holding part (14) connectable thereto in a starting position and which is out of engagement with the box bar (5) and/or the bar holding part (14) connectable thereto in a yielded trigger position.

6. A locking apparatus in accordance with the preceding claim, wherein the retention element (21) is movably mounted between the named starting position and the named trigger position and is pressurised into the locking starting position by the spring device (24).

7. A locking apparatus in accordance with the preceding claim, wherein the movably mounted bar holding part (14) is held by the retention element (21) in a position connected to the fitting part (13) until the reaching of the named threshold force onto the box bar (5).

8. A locking apparatus in accordance with one of the preceding claims, wherein the bar holding part (14) is configured as a sliding part which can be slid only from below into a fixedly mountable slide guiding part and/or a sliding part slidable thereon.

9. A locking apparatus in accordance with one of the claims 71 to 7, wherein the named bar holding part is configured as pivot jaws (26) having a receiving mouth (28) open to one side.

10. A locking apparatus in accordance with one of the preceding claims, wherein the retention element (21) has a sliding surface which acts as a wedge surface (23) and on which the box bar (5) or a bar holding part connectable thereto slide off.

11. An animal box, in particular a horse box of a horse transporter, having a locking apparatus in accordance with one of the claims 1 to 10.

## Revendications

1. Dispositif de verrouillage pour box pour animaux, en particulier pour box pour chevaux (2) d'un van (1), avec une barre de box (5) pour fermer le box pour animaux, maintenue au niveau de ses extrémités par des fixations de barre (6, 7), au moins l'une des fixations de barre (6) présentant un déverrouillage d'urgence (11) pour défaire la barre de box (5) de la fixation de barre (6) respective, le déverrouillage d'urgence (11) présentant un mécanisme de détachement (12) commandé par la force pour le détachement automatique lors d'application sur la barre de box (5) d'une force (F) orientée vers le bas sur le plancher du box pour animaux et dépassant une valeur de seuil, le mécanisme de détachement (12) comprenant une pièce de maintien de barre (14) à verrouillage détachable avec la barre de box (5), ladite pièce étant logée de manière mobile sur une pièce de ferrure (13) pouvant être montée de manière fixe et, lorsque la valeur de seuil est atteinte, pouvant être déplacée vers le bas sur le plancher du box pour animaux au moins avec une section de maintien maintenant la barre de box (5), **caractérisé en ce que** le mécanisme de détachement (12) présente un dispositif de réglage (25) pour régler la force de détachement pour détacher la pièce de maintien de barre (14) et le déverrouillage d'urgence (11) présente en plus du mécanisme de détachement automatique un déverrouillage manuel avec un élément d'actionnement manuel pouvant être actionné sans outil qui est disposé sur un côté extérieur du box pour animaux (2).

2. Dispositif de verrouillage selon la revendication précédente, le mécanisme de détachement (12) étant réalisé pour résister au détachement par les forces horizontales et/ou ascendantes depuis le plancher du box pour animaux et exercées sur la barre de box (5) et/ou présentant un limiteur de mouvement (30) pour limiter les mouvements de la barre de box (5) en direction horizontale et/ou ascendante.

3. Dispositif de verrouillage selon une quelconque des revendications précédentes, la fixation de barre (6) présentant un dispositif de guidage, de préférence en forme de glissière coulissante (17), pour le guidage mobile de la barre de box (5) et/ou une pièce de maintien de barre (14) pouvant être reliée à celle-ci en direction verticale et/ou un dispositif de butée pour limiter et/ou empêcher les mouvements horizontaux de la barre de box (5) et/ou de la pièce de maintien de barre (14) pouvant être reliée à celle-ci.

4. Dispositif de verrouillage selon une quelconque des revendications précédentes, le mécanisme de détachement (12) présentant un dispositif à ressort (24) pour la retenue élastique de la barre de box (5) sur la fixation de barre (6) jusqu'à l'obtention de ladite force de seuil.

5. Dispositif de verrouillage selon une quelconque des revendications précédentes, le mécanisme de détachement (12) présentant un élément de retenue (21) mobile se relâchant sous sollicitation de charge, qui dans une position initiale, verrouille la barre de box (5) et/ou une pièce de maintien de barre (14) pouvant être reliée à celle-ci et dans une position de détachement se relâchant, est hors prise avec la barre de box (5) ou la pièce de maintien de barre (14) pouvant être reliée à celle-ci.

6. Dispositif de verrouillage selon la revendication précédente, l'élément de retenue (21) étant disposé de manière mobile entre ladite position initiale et ladite position de détachement et étant précontraint en position initiale de verrouillage par le dispositif à ressort (24).

7. Dispositif de verrouillage selon la revendication précédente, l'élément de maintien de barre (14) disposé de manière mobile étant maintenu sur la barre de box (5) dans une position reliée à la pièce de ferrure (13) par l'élément de retenue (21) jusqu'à l'obtention de ladite force de seuil.

8. Dispositif de verrouillage selon une quelconque des revendications précédentes, la pièce de maintien de barre (14) étant réalisée sous forme d'une pièce coulissante pouvant coulisser uniquement depuis le bas dans ou sur une pièce de glissière coulissante à montage fixe.

9. Dispositif de verrouillage selon une quelconque des revendications 1 à 7, ladite pièce de maintien de barre étant réalisée comme mâchoire pivotante (26) avec une mâchoire de logement (28) ouverte sur un côté.

10. Dispositif de verrouillage selon une quelconque des revendications précédentes, l'élément de retenue (21) présentant une surface de glissement agissant comme surface cunéiforme (23), sur laquelle la barre de box (59) ou une pièce de maintien de barre pouvant être reliée à celle-ci glisse lors de son détachement.

11. Box pour animaux, en particulier box pour chevaux d'un van, avec un dispositif de verrouillage selon une quelconque des revendications 1 à 10.
